# DEMANDE DE BREVET EUROPEEN

(11) **EP 2 133 230 A1**
(43) Date de publication de la demande: **16.12.2009**
(21) Numéro de dépôt: 09161229.1
(22) Date de dépôt: 27.05.2009
(51) Int. Cl.: B60J 1/20

(54) **Dispositif d'occultation pour véhicule automobile à toiles solidarisables, et véhicule automobile correspondant**

(30) Priorité: 13.06.2008 FR 0853946
(71) Demandeur: Wagon SAS, 79302 Bressuire (FR)
(72) Inventeur: Jincheleau, Michel, 79320 Moncoutant (FR); Violleau, Christian, 79330 Glenay (FR)
(74) Mandataire: Bioret, Ludovic

(57) **Abrégé**

L'invention concerne un dispositif d'occultation d'une surface d'un véhicule automobile, comprenant deux toiles d'occultation montées sur au moins un tube enrouleur, ledit dispositif comprenant des moyens de solidarisation réversible par fermeture à glissière, et des moyens de jonction aptes à assurer la jonction progressive desdits moyens de solidarisation de façon à joindre entre elles les parties déployées desdites toiles.

Selon l'invention, les moyens de jonction comprennent un curseur porté par l'une desdites toiles ou une barre de tirage solidaire de celle-ci, et mobile entre une position inactive et une position de solidarisation, lesdits moyens de jonction assurant :
- une phase d'initialisation de la jonction, assuré par le déplacement de ladite position inactive vers ladite position de solidarisation, et
- une phase de poursuite de la jonction, assuré par le déroulement desdites toiles, ledit curseur restant immobile par rapport au(x)dit(s) tube(s) enrouleur(s), dans ladite position de solidarisation.

## Description

### 1. Domaine de l'invention

Le domaine de l'invention est celui des équipements pour véhicules automobiles. Plus précisément, l'invention concerne l'occultation d'un espace ou d'une surface d'un véhicule automobile. Elle concerne en particulier les cache-bagages, mais également les stores occultants de surfaces vitrées ou d'ouvertures, comme les stores de toit, les stores de hayon et les stores de pare-brise, les coupe-vents, et tous les systèmes similaires pouvant mettre en oeuvre des toiles ou écrans amovibles.

### 2. Solutions de l'art antérieur

On connaît de nombreuses solutions de systèmes d'occultation pour les véhicules automobiles. Ces systèmes d'occultation sont souvent constitués d'une ou plusieurs toiles d'occultation qui sont montées sur un tube enrouleur placé dans une cassette ou boîtier.

Dans certains cas, cette cassette peut être amovible. C'est souvent le cas, notamment, des cassettes de cache-bagages ou des cassettes de stores de pare-brise. Ces cassettes peuvent ainsi être stockées dans le véhicule (ou à l'extérieur de celui-ci) quand elles ne sont pas utilisées.

Un inconvénient de cette solution est que ces cassettes sont de dimensions importantes. En effet, les stores ou toiles d'occultation qu'elles comprennent présentent généralement une largeur proche de la largeur du véhicule, de façon à couvrir toute la surface du coffre, du pare-brise, ou du pavillon du véhicule. Il est donc difficile de trouver dans le véhicule un emplacement pratique de stockage de ces cassettes de grande longueur.

Des cassettes pliantes ont été envisagées pour répondre à ce problème. Ces cassettes contiennent deux tubes enrouleurs qui sont alignés, dans leur position d'utilisation, pour permettre de déployer deux toiles parallèlement. La cassette, une fois pliée, présente une longueur presque deux fois moins importante que si elle ne contenait qu'une seule toile couvrant la même surface.

Cependant, les deux toiles d'occultation présentent un aspect beaucoup moins satisfaisant que les toiles uniques, en utilisation. En effet, du fait de la disposition des tubes enrouleurs dans les deux parties de la cassette, de part et d'autre d'une charnière, les toiles d'occultation ne peuvent pas être jointives, et il existe donc entre les toiles une fente non occultée. Cet inconvénient est difficilement acceptable sur les véhicules, notamment sur des véhicules haut de gamme.

La Demanderesse a proposé, dans la demande EP 1 852 289, un dispositif d'occultation pour véhicule comprenant deux toiles enroulées sur des tubes enrouleurs de façon indépendantes, mais dont les bords sont solidarisables au fur et à mesure de leur déploiement. Ces toiles peuvent donc être reliées, ou solidarisées l'une à l'autre, sur leurs parties déployées alors que leurs parties enroulées ne le sont pas.

Dans un mode de réalisation, un mécanisme de jonction ou d'assemblage des toiles de type fermeture à glissière est décrit.

Un tel dispositif permet de conserver la qualité d'occultation d'une toile unique, tout en rendant possible de nombreuses applications, telles que le pliage de la cassette.

Cependant, cette approche intéressante s'avère difficile à mettre en oeuvre en pratique, de façon fiable et durable dans le temps, et à réaliser de façon industrielle.

### 3. Objectifs de l'invention

L'invention a notamment pour objectif de pallier ces inconvénients de l'art antérieur.

Plus précisément, un objectif de l'invention est de fournir un dispositif d'occultation comprenant plusieurs toiles solidarisables par une fermeture à glissière, qui soit fiable et efficace.

Un autre objectif de l'invention est de fournir un tel dispositif, qui puisse être réalisé de façon industrielle et à un coût raisonnable.

L'invention a également pour objectif de fournir un tel dispositif, qui soit simple à utiliser et à mettre en oeuvre pour les utilisateurs.

Pour certains modes de réalisation particuliers, l'invention a également pour objectif de fournir un tel dispositif présentant une cassette pliante pour de tels stores qui soit particulièrement fiable et facile à installer.

### 3. Exposé de l'invention

Ces objectifs, ainsi que d'autres qui apparaîtront par la suite, sont atteints à l'aide d'un dispositif d'occultation d'une surface d'un véhicule automobile, comprenant deux toiles d'occultation montées sur au moins un tube enrouleur, et se déployant suivant des directions sensiblement parallèles, ledit dispositif comprenant des moyens de solidarisation réversible par fermeture à glissière, chacune desdites toiles portant des moyens de solidarisation complémentaires susceptibles de s'engrener l'un dans l'autre, et des moyens de jonction situés à proximité du ou desdits tubes enrouleurs aptes à assurer la jonction progressive desdits moyens de solidarisation de façon à joindre entre elles les parties déployées desdites toiles, lesdites toiles n'étant pas jointes sur leur partie enroulée.

Selon l'invention, les moyens de jonction comprennent un curseur porté par l'une desdites toiles ou une barre de tirage solidaire de celle-ci, et mobile entre une position inactive et une position de solidarisation, lesdits moyens de jonction assurant :
- une phase d'initialisation de la jonction, assurée par le déplacement entre ladite position inactive vers ladite position de solidarisation, et
- une phase de poursuite de la jonction, assurée par le déroulement desdites toiles, ledit curseur restant immobile par rapport auxdits tubes enrouleurs, dans la position de solidarisation.

Ainsi, la jonction des toiles enroulées par exemple sur des tubes enrouleurs distincts est amorcée par le déplacement d'un curseur porté par l'une des toiles d'une position inactive à une position de solidarisation. Une fois le curseur en position de solidarisation, le curseur reste immobile et les toiles peuvent être déployées, le curseur assurant alors la jonction progressive des toiles sur leurs parties déployées.

On conserve ainsi la qualité d'occultation d'une toile unique, tout en rendant possible de nombreuses applications, telles que le pliage de la cassette.

L'opération peu aisée de l'initialisation de la jonction est assurée, selon l'invention, par le curseur, monté de façon à pouvoir se déplacer de la position inactive à la position de solidarisation.

On dispose ainsi d'un système simple et efficace, dans lequel l'utilisateur peut dans un premier temps, par l'intermédiaire d'un curseur mobile, joindre le bord des toiles et ensuite déployer les toiles par le biais des barres de tirage, le curseur assurant la jonction progressive des toiles déployées.

On notera que, selon l'approche de l'invention, les moyens de solidarisation et les moyens de jonction forment une fermeture à glissière. Bien sûr de nombreux autres moyens de solidarisation progressive et réversible connus peuvent être adaptés et mis en oeuvre.

Il est important de noter par ailleurs que l'approche de l'invention se distingue de l'art antérieur par sa décomposition de la solidarisation en deux phases, une première d'initialisation, supposant un déplacement du curseur, puis une phase de poursuite de la jonction pendant laquelle ce curseur est immobile.

De façon avantageuse, le curseur comprend des moyens d'accrochage à au moins un desdits tubes enrouleurs et/ou à un boîtier contenant au moins un desdits tubes.

Cette approche permet d'assurer l'accrochage du curseur aux tubes enrouleurs et/ou au boîtier dans la position de solidarisation, et ainsi de maintenir le curseur immobile lors du déploiement des toiles.

Dans ce cas, ledit curseur comprend des moyens d'actionnement mobiles autour d'un axe de rotation dudit curseur permettant le désengagement desdits moyens d'accrochage avec au moins un desdits tubes enrouleurs et/ou un boîtier contenant au moins un desdits tubes.

Ainsi, l'accrochage du curseur aux tubes enrouleurs et/ou au boîtier peut être libéré de manière simple et rapide par le basculement d'une zone d'actionnement manuel du curseur.

Selon un autre mode de réalisation de l'invention, lesdits moyens de jonction comprennent un élément d'arrêt fixe par rapport à une desdites toiles et solidaire d'une extrémité de l'un desdits moyens de solidarisation.

Avantageusement, ledit curseur coopère avec ledit élément d'arrêt par des moyens de connexion mobiles dans ladite position inactive.

Ceci permet de maintenir immobile le curseur en position inactive et donc de faciliter l'initialisation de la jonction des toiles.

Avantageusement, le dispositif d'occultation comprend des moyens de verrouillage / déverrouillage de la rotation desdits tubes à enrouleur.

Ceci permet de contrôler le déverrouillage des tubes de store et de limiter les risques de déploiement accidentel des stores.

Préférentiellement, ledit curseur porte des moyens de libération de la rotation desdits tubes à enrouleur, agissant sur lesdits moyens de verrouillage / déverrouillage dans ladite position de solidarisation.

Dans ce cas, lesdits moyens de libération peuvent comprendre un élément en forme de tige actionnant lesdits moyens de verrouillage / déverrouillage dans ladite position de solidarisation.

Ainsi, le verrouillage / déverrouillage des stores est mis en oeuvre par un élément en forme de tige du curseur. Dans la position inactive du curseur, la rotation des tubes à enrouleur est verrouillée et les stores ne peuvent être déployés. Dans la position de solidarisation du curseur, l'élément en forme de tige actionne les moyens de verrouillage / déverrouillage de la rotation des tubes à enrouleur et, en conséquence, les stores peuvent être déroulés.

Selon un mode de réalisation préférentiel, chacune desdites toiles est montée sur un tube enrouleur distinct.

Avantageusement, lesdits tubes enrouleurs peuvent prendre au moins deux positions :
- une première position dans laquelle lesdits tubes enrouleurs sont situés sensiblement sur un même axe ; et
- au moins une deuxième position dans laquelle les axes desdits tubes enrouleurs forment entre eux un angle non nul.

Cette approche permet le montage des tubes enrouleurs dans une cassette pliable.

Une telle cassette pliable peut notamment être formée de deux demi-cassettes articulées l'une par rapport à l'autre.

Parmi les différentes applications de l'invention, on peut notamment citer:
- les cache-bagages;
- les stores de compartimentage de coffre ;
- les stores d'occultation de pavillon ;
- les stores d'occultation de lunette arrière;
- les stores d'occultation de pare-brise;
- les stores de protection extérieure ou intérieure de pare-brise;
- les dispositifs coupe-vent.

L'invention concerne également les véhicules automobiles comprenant au moins un dispositif d'occultation tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un dispositif d'occultation selon un premier mode de réalisation de l'invention, en cours de déploiement ;
- la figure 2 présente le dispositif d'occultation de la figure 1 dans une position partiellement pliée;
- la figure 3 est une vue de détail du curseur des moyens de jonction du dispositif d'occultation de la figure 1 selon un mode de réalisation;
- la figure 4 est une vue partielle du dispositif d'occultation de la figure 1 montrant les moyens de jonction de la figure 3, dans une position inactive;
- la figure 5 est une vue partielle du dispositif d'occultation de la figure 1 montrant les moyens de jonction de la figure 3, dans une position de solidarisation ;
- la figure 6 est une vue de détail de l'élément d'arrêt des moyens de jonction du dispositif d'occultation de l'invention selon un mode de réalisation;
- les figures 7 et 8 sont des vues schématiques des moyens de jonction et des moyens de solidarisation du dispositif d'occultation;
- la figure 9 est une autre vue partielle du dispositif d'occultation dans une position partiellement pliée montrant les moyens de jonction et les moyens de solidarisation des figures 7 et 8 ;
- les figures 10, 11 et 12 représentent partiellement l'initialisation de la jonction des moyens de solidarisation par les moyens de jonction.

### 6. Description détaillée de l'invention

### 6.1 Rappel du principe de l'invention

Le principe général de l'invention repose sur des moyens de solidarisation réversible, par exemple de type fermeture à glissière, permettant de joindre deux bords voisins de toiles d'occultation au fur et à mesure de leur déploiement. L'initialisation (ou l'amorçage), de la jonction des moyens de solidarisation des toiles est effectuée par le déplacement d'un curseur d'une position inactive à une position de solidarisation. Une fois le curseur en position de solidarisation, celui-ci reste immobile et les toiles peuvent être progressivement reliées, ou solidarisées, l'une à l'autre sur leurs parties déployées alors que leurs parties enroulées ne le sont pas.

Selon un mode de réalisation préférentiel, mais non exclusif, de l'invention, ces moyens de solidarisation coopèrent avec une cassette, qui peut être pliable.

### 6.2 Présentation d'un mode de réalisation

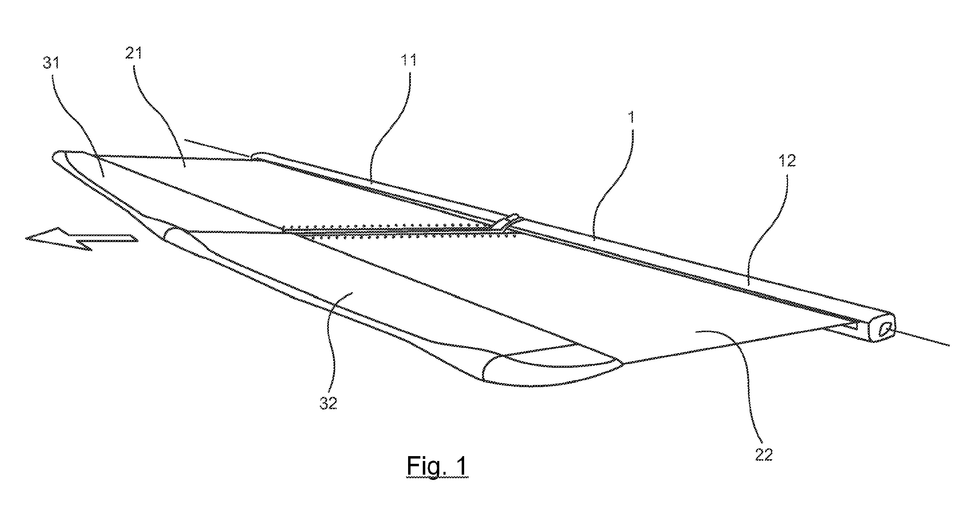

Les figures 1 à 12 illustrent un système, ou dispositif, d'occultation selon un mode de réalisation de l'invention. La figure 1 présente ce système dans une position d'utilisation. Ce système d'occultation comprend une cassette 1 composée de deux demi-cassettes (ou boîtiers) 11 et 12 articulées l'une par rapport à l'autre. Chacune de ces demi-cassettes, respectivement 11 et 12, comprend un tube enrouleur (non représenté), sur lequel est montée une toile d'occultation (ou store), respectivement 21 et 22. Des barres de tirage, respectivement 31 et 32, sont solidaires de l'extrémité de chacune des toiles 21 et 22.

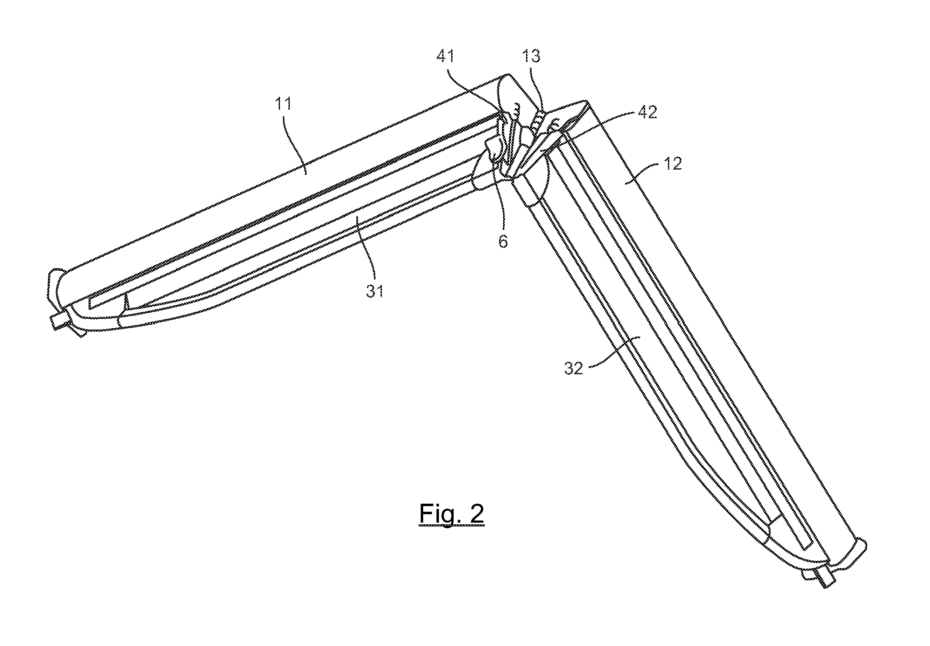

La cassette 1 est ainsi une cassette pliable, qui peut donc être entreposée, dans le véhicule notamment, beaucoup plus facilement qu'une cassette en une seule partie. Les deux demi-cassettes 11 et 12 peuvent pivoter l'une par rapport à l'autre grâce à une charnière 13, qui est représentée avec les demi-cassettes 11 et 12 partiellement repliées sur la figure 2. Normalement, les toiles 21 et 22 sont enroulées complètement lorsque le dispositif est plié.

Dans la position d'utilisation du dispositif, comme illustré figure 1, les tubes enrouleurs sont alignés, et les barres de tirage 31 et 32 peuvent être jointes par leur extrémité. Il est possible de tirer sur les barres de tirage (ou la barre de tirage globale formée par leur solidarisation) pour déployer les toiles 21 et 22. Ces deux toiles d'occultation se déploient alors parallèlement. Pour éviter qu'un jour apparaisse entre les bords des deux toiles d'occultation 21 et 22, au niveau du milieu de la cassette 1, un mécanisme de solidarisation réversible des toiles est prévu.

### 6.3 Exemple de moyens de solidarisation

Ce mécanisme de solidarisation réversible comprend notamment des moyens de solidarisation 41 et 42 complémentaires montés sur le bord de chacune des toiles 21 et 22. Des moyens de jonction 6, situés à proximité des tubes enrouleurs, sont en outre prévus pour solidariser entre eux, de façon réversible, les éléments de solidarisation 41 et 42.

Selon un mode de réalisation préférentiel, les moyens de solidarisation 41 et 42 et les moyens de jonction 6 forment une fermeture à glissière.

Les moyens de solidarisation 41 et 42 peuvent être sous la forme classique d'une rangée de dents (espacées de préférence à intervalles réguliers) montées sur le bord de chacune des toiles 21 et 22 et susceptibles de s'engrener l'une dans l'autre.

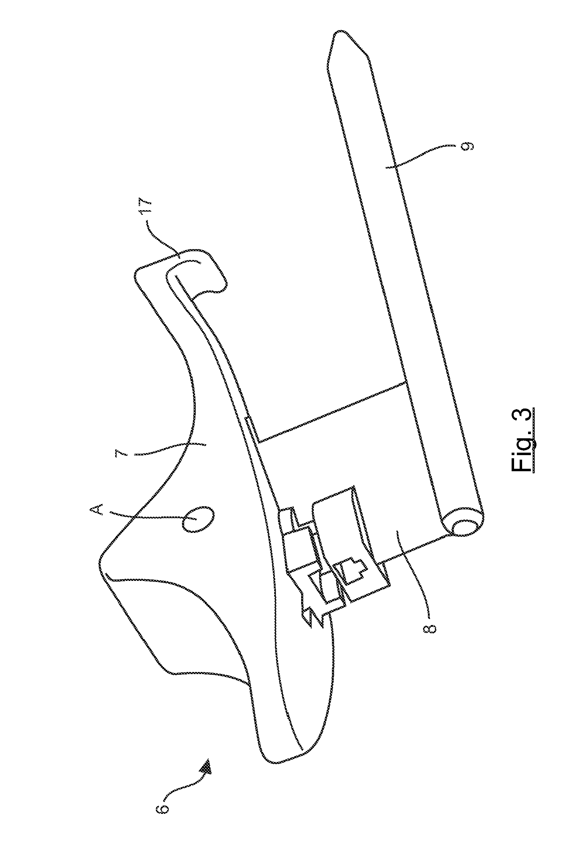

Dans un mode de réalisation, les moyens de jonction 6 comprennent un curseur 8 qui est porté par l'une des toiles 21, 22 ou une des barres de tirage 31, 32. Comme illustré figure 3, le curseur 8 comprend un élément d'actionnement 7 dont une des extrémités comprend des moyens d'accrochage à au moins un des tubes enrouleurs et/ou à un boîtier 11, 12 contenant au moins un des tubes enrouleurs.

Dans ce mode de réalisation, les moyens d'accrochage se présentent sous la forme d'un crochet 17 recourbé vers l'intérieur. L'élément d'actionnement 7 est monté mobile autour d'un pivot/axe A du curseur 8. L'élément d'actionnement 7 peut ainsi être percé de deux trous débouchant qui sont axialement alignés, dans lesquels deux pattes du curseur 8 peuvent se loger.

Le curseur 8 comprend de manière classique deux canaux de guidage permettant le passage des rangées de dents des moyens de solidarisation 41 et 42, et des moyens de libération de la rotation des tubes enrouleurs sous la forme d'une tige ou d'un doigt 9.

De manière connue, l'élément d'actionnement 7 est destiné à faciliter la manipulation et le mouvement de va-et-vient du curseur 8, et ainsi à ouvrir ou fermer la fermeture à glissière.

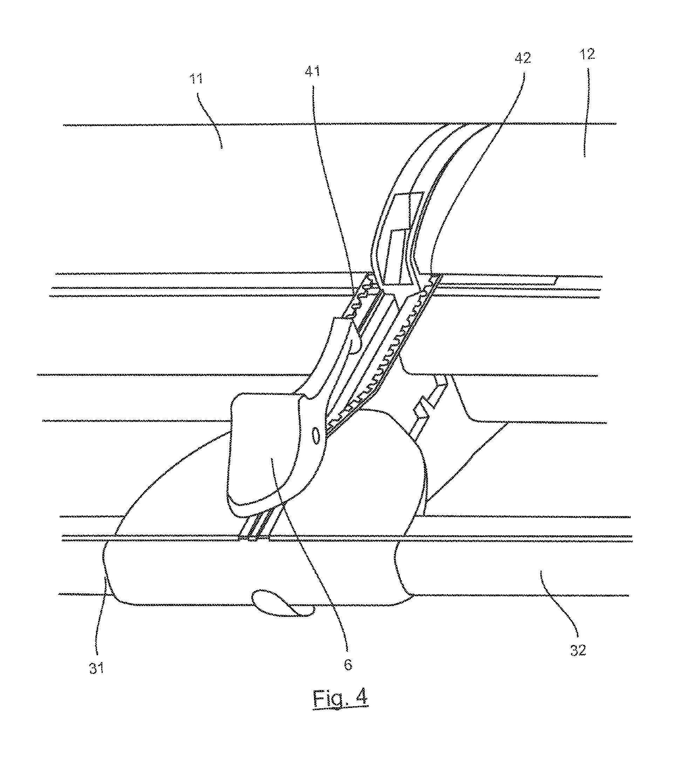

La figure 4 montre le curseur 8 dans une position inactive, les deux demi-cassettes 11, 12 portant les tubes à enrouleur étant alignés et l'amorçage de la solidarisation des toiles ayant été effectué (un exemple de moyens d'amorçage de la solidarisation sera décrit plus en détail par la suite). En d'autres termes, les moyens de solidarisation 42 situés à l'extrémité de la barre de tirage 32 sont situés dans un des canaux de guidage du curseur 8, et les moyens de solidarisation 41 sont situés dans l'autre canal de guidage du curseur 8.

Il est nécessaire, avant de pouvoir déployer les toiles 21 et 22 du store, d'initialiser la jonction des deux bords voisins des toiles d'occultation 21 et 22. Pour ce faire, le curseur 8 doit être manuellement déplacé en translation par l'utilisateur vers la cassette 1, par le biais de l'élément d'actionnement 7, ce qui permet l'initialisation de la jonction des moyens de solidarisation 41 et 42.

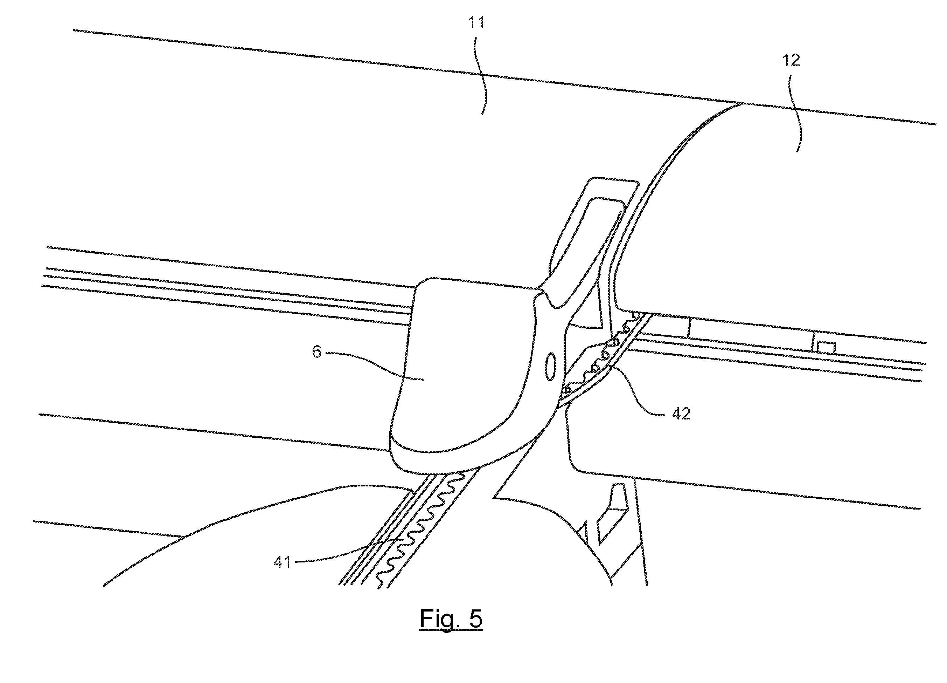

La figure 5 montre le curseur 8 dans une position de solidarisation où il est engagé dans la charnière 13 par l'intermédiaire du crochet 17 qui est retenu par des moyens de réception du crochet 17 situés sur au moins une des demi-cassettes 11, 12. On distingue clairement les moyens de solidarisation 41, 42 des deux toiles qui sont engrenés, ou engagés, l'un dans l'autre.

Dans cette position de solidarisation, les tubes enrouleurs sont déverrouillés par la tige 9 du curseur 8 et l'utilisateur peut déployer les toiles 21 et 22 en tirant sur les barres de tirage 31, 32 (flèche F). Il est préférable que la charnière des demi-cassettes soit bloquée lorsque le curseur 8 est en position de solidarisation afin d'éviter le pliage intempestif de ces cassettes.

Au fur et à mesure du déploiement des toiles, le curseur 8, qui reste immobile dans la charnière 13 par rapport aux tubes enrouleurs, assure la jonction (ou engrenage, ou rassemblement) progressive des toiles 21 et 22 au niveau de la sortie des demi-cassettes 11 et 12 contenant chacune un tube à enrouleur. En d'autres termes, le curseur rassemble les moyens de solidarisation 41 et 42 fixés aux bords des toiles 21 et 22, et les solidarise. Seules les parties déployées des toiles 21 et 22 sont donc solidarisées, les parties de ces toiles qui sont enroulées sur les tubes enrouleurs restant indépendantes l'une de l'autre.

Lors du repli, le curseur 8 assure la séparation des deux toiles 21 et 22.

Une fois les toiles 21 et 22 repliées sur les tubes enrouleurs à l'intérieur des boîtiers, le curseur peut être désolidarisé du ou des tubes enrouleurs et/ou d'un boîtier contenant au moins un des tubes. La désolidarisation est effectuée en actionnant l'élément d'actionnement 7 de manière à le faire pivoter autour de l'axe A et ainsi de libérer le crochet 17 des moyens de réception du crochet situés dans la charnière 13. Les tubes enrouleurs sont alors verrouillés et les stores ne peuvent donc plus être déployés. Les deux demi-cassettes 11, 12 peuvent en outre être pliées afin par exemple de ranger le dispositif d'occultation dans le coffre d'un véhicule.

Les barres de tirage peuvent comprendre des moyens de liaison, qui peuvent assurer la solidarisation lorsque la cassette est dépliée.

Pour que les bords des toiles d'occultation 21 et 22 puissent être jointifs, les toiles peuvent être au moins partiellement élastique. Ainsi, une bande de toile élastique peut être cousue sur le bord des toiles d'occultation 21 et 22 et porte les moyens de solidarisation 41 et 42. Les bords des toiles peuvent ainsi se déformer pour se rapprocher l'un de l'autre.

Dans certains cas, en position d'utilisation, les deux tubes enrouleurs peuvent ne pas être complètement alignés, par exemple lorsqu'un effet de galbe est souhaité. En outre, les deux demi-cassettes 11 et 12 peuvent être verrouillées l'une à l'autre par leur extrémité. Une commande de déverrouillage peut permettre de déverrouiller les deux demi-cassettes 11 et 12.

### 6.4 Exemple de moyens d'amorçage de la solidarisation

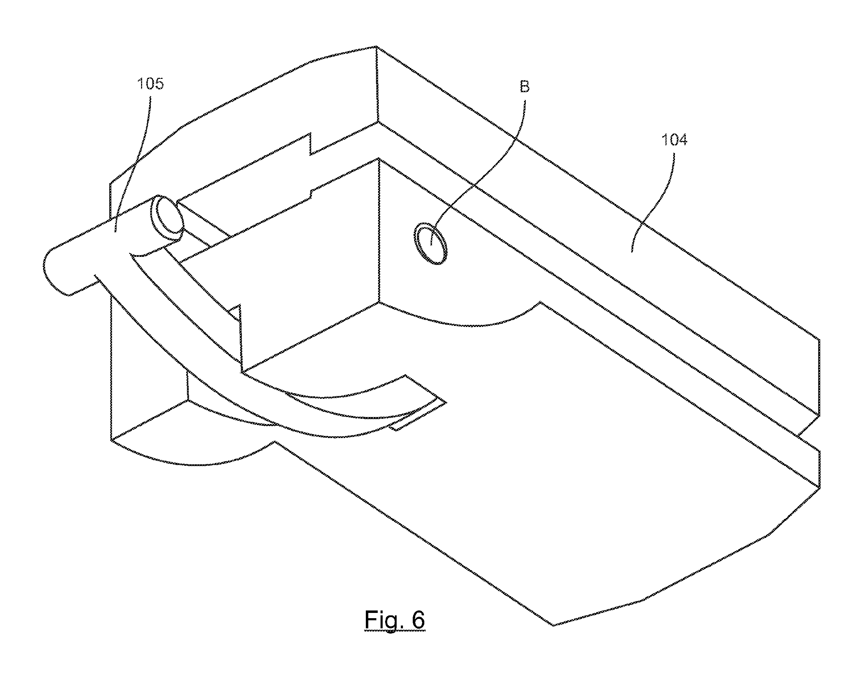

Les figures 6 à 12 illustrent un exemple de moyens d'amorçage de la solidarisation des toiles pour le dispositif décrit ci-dessus. Ces moyens comprennent un curseur 108 mobile et un élément d'arrêt 104, ce dernier étant représenté en détail sur la figure 6.

L'élément d'arrêt 104 est monté fixe par rapport à une des toiles 121 et est solidaire d'une extrémité de l'un des moyens de solidarisation 141 (montés sur le bord de la toile 121). L'élément d'arrêt 104 comprend des moyens de connexion mobiles 105 montés pivotant autour d'un axe B et deux canaux de guidage permettant le passage des rangées de dents des moyens de solidarisation 141 et 142. L'élément d'arrêt 104 peut ainsi être percé de deux trous débouchant axialement alignés dans lesquels deux pattes des moyens de connexion mobiles 105 peuvent se loger.

Le curseur 108 comprend également deux canaux de guidage permettant le passage des rangées de dents des moyens de solidarisation 141 et 142, des moyens d'actionnement (non représenté) et des moyens de libération de la rotation des tubes enrouleurs sous la forme d'une tige ou d'un doigt 109.

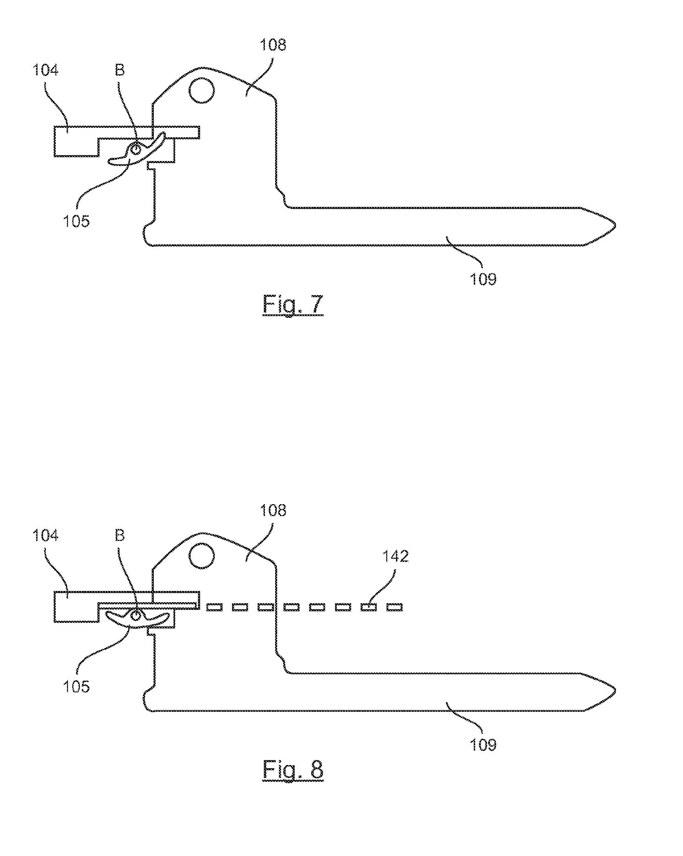

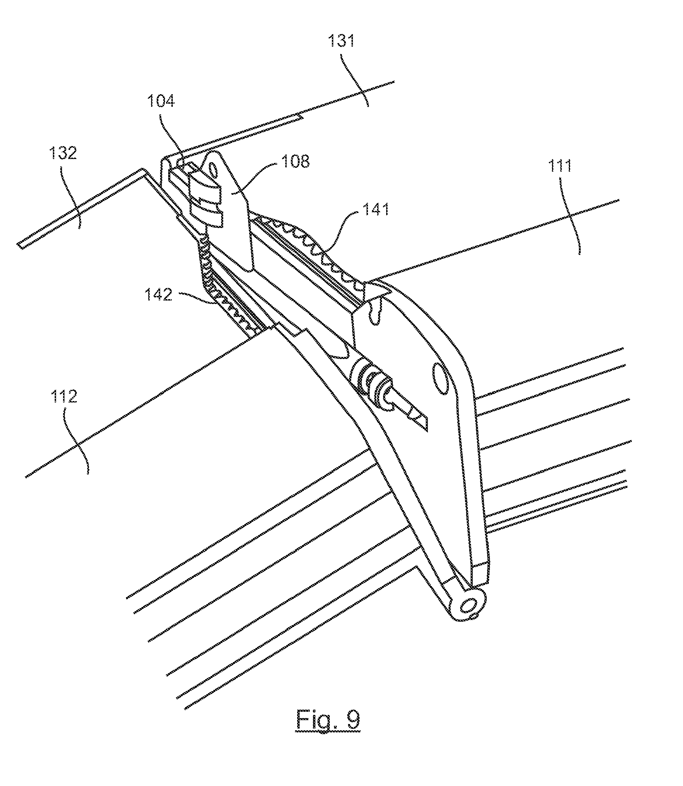

Comme illustré schématiquement sur la figure 7, et également sur la figure 9 où le dispositif d'occultation est partiellement plié, le curseur 108 peut coopérer avec l'élément d'arrêt 104 par l'intermédiaire des moyens de connexion mobiles 105 dans la position inactive. Les moyens de connexion mobiles maintiennent alors le curseur 108 immobile par rapport à l'élément d'arrêt 104, de préférence en contact avec l'élément d'arrêt 104.

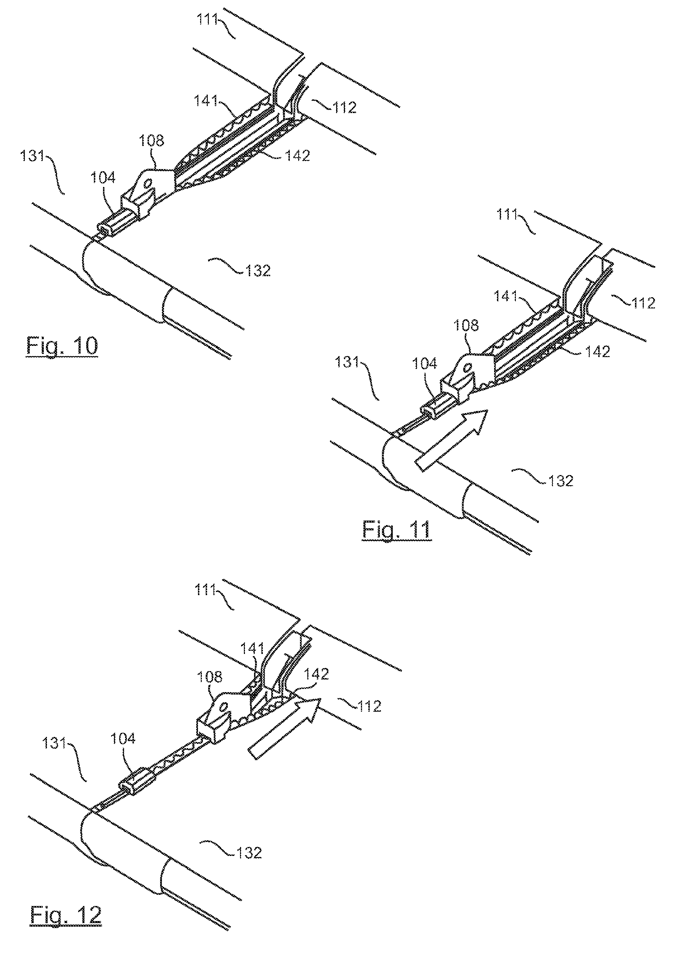

Quand les demi-cassettes 111, 112 sont dans l'alignement l'une de l'autre, comme représenté sur les figures 10 à 12, l'utilisateur peut amorcer la solidarisation des moyens de solidarisation 141 et 142 en introduisant une extrémité des moyens de solidarisation 142 dans un canal de guidage du curseur 108 puis dans le canal de guidage correspondant de l'élément d'arrêt 104. En conséquence, les moyens de connexion mobiles 105 pivotent sous la force de l'extrémité guidée des moyens de solidarisation 142 et libèrent le curseur 108 de l'élément d'arrêt 104, comme illustré sur la figure 8.

La translation du curseur 108 vers les demi-cassettes 111, 112 permet, comme souligné auparavant, d'initialiser la jonction des moyens de solidarisation 141, 142, comme illustré sur les figures 11 et 12.

Une fois en position de solidarisation, les moyens de verrouillage / déverrouillage (ou de déblocage, ou de débrayage) des tubes enrouleurs 111A, 112A sont déverrouillés par le doigt 109 du curseur 108 ce qui permet le déploiement des toiles. Le curseur 108 reste immobile par rapport aux tubes enrouleurs et assure la poursuite de la jonction progressive des toiles lorsque celles-ci sont déroulées.

Lors du repli, le curseur 108 assure la séparation des moyens de solidarisation 141, 142.

### 6.5 Autres caractéristiques et avantages

Les modes de réalisation de l'invention décrits ci-dessus présentent le cas de cassettes de stores à enrouleurs pliables. Cependant l'invention peut également s'appliquer à tout autre cas de toiles d'occultation montées sur un ou plusieurs tubes enrouleurs, qui peuvent être alignés, décalés, ou former un angle entre eux, et dans lesquels il est utile de solidariser par leurs bords les toiles d'occultation. Plus de deux toiles peuvent ainsi être solidarisées les unes aux autres simultanément.

Par ailleurs, le mécanisme décrit, et notamment les moyens de passage de la position inactive à la position de solidarisation peuvent être adaptés en fonction des besoins et des applications.

Le dispositif de l'invention peut en effet être adapté pour des cache-bagages, mais également des coupe-vents (partie horizontale et/ou partie verticale), des stores d'occultation d'une surface vitrée, des stores extérieurs de protection contre le soleil ou le gel,...

Les moyens de solidarisation et les moyens de jonction peuvent également former une fermeture semblable à celles utilisées pour la fermeture de sachets plastique (de congélation par exemple), et connues notamment sous la marque déposée « minigrip ». Bien entendu, les moyens de solidarisation et les moyens de jonction peuvent également former tout autre moyen de fermeture du même type ou ayant les mêmes effets de solidarisation et de désolidarisation progressives, lors du déploiement ou du repli respectivement.

## Revendications

1. Dispositif d'occultation d'une surface d'un véhicule automobile, comprenant deux toiles d'occultation (21, 22) montées sur au moins un tube enrouleur, et se déployant suivant des directions sensiblement parallèles, ledit dispositif comprenant des moyens de solidarisation réversible par fermeture à glissière, chacune desdites toiles (21, 22) portant des moyens de solidarisation (41, 42) complémentaires susceptibles de s'engrener l'un dans l'autre, et des moyens de jonction (6) situés à proximité du ou desdits tubes enrouleurs aptes à assurer la jonction progressive desdits moyens de solidarisation (41, 42) de façon à joindre entre elles les parties déployées desdites toiles (21, 22), lesdites toiles (21, 22) n'étant pas jointes sur leur partie enroulée,
**caractérisé en ce que** lesdits moyens de jonction (6) comprennent un curseur (8) porté par l'une desdites toiles (21, 22) ou une barre de tirage (31, 32) solidaire de celle-ci, et mobile entre une position inactive et une position de solidarisation, lesdits moyens de jonction (6) assurant :
- une phase d'initialisation de la jonction, assuré par le déplacement de ladite position inactive vers ladite position de solidarisation, et
- une phase de poursuite de la jonction, assuré par le déroulement desdites toiles (21, 22), ledit curseur (8) restant immobile par rapport au(x)dit(s) tube(s) enrouleur(s), dans ladite position de solidarisation.

2. Dispositif d'occultation selon la revendication 1, **caractérisé en ce que** ledit curseur (8) comprend des moyens d'accrochage (17) à au moins un desdits tubes enrouleurs et/ou à un boîtier (11, 12) contenant au moins un desdits tubes.

3. Dispositif d'occultation selon la revendication 2, **caractérisé en ce que** ledit curseur (8) comprend des moyens d'actionnement (7) mobile autour d'un axe de rotation (A) dudit curseur (8) permettant le désengagement desdits moyens d'accrochage (17) avec au moins un desdits tubes enrouleurs et/ou dudit boîtier (11, 12) contenant au moins un desdits tubes.

4. Dispositif d'occultation selon l'une quelconque des revendications 1 à 3, **caractérisé en ce que** lesdits moyens de jonction (6) comprennent un élément d'arrêt (104) fixe par rapport à une desdites toiles (21, 22) et solidaire d'une extrémité de l'un desdits moyens de solidarisation (141).

5. Dispositif d'occultation selon la revendication 4, **caractérisé en ce que** ledit curseur (8) coopère avec ledit élément d'arrêt (104) par des moyens de connexion (105) mobiles, dans ladite position inactive.

6. Dispositif d'occultation selon l'une quelconque des revendications 1 à 5, **caractérisé en ce qu'**il comprend des moyens de verrouillage / déverrouillage de la rotation desdits tubes enrouleurs.

7. Dispositif d'occultation selon la revendication 6, **caractérisé en ce que** ledit curseur (8) porte des moyens de libération (9) de la rotation desdits tubes à enrouleur, agissant sur lesdits moyens de verrouillage / déverrouillage dans ladite position de solidarisation.

8. Dispositif d'occultation selon la revendication 7, **caractérisé en ce que** lesdits moyens de libération (9) comprennent une tige actionnant lesdits moyens de verrouillage / déverrouillage dans ladite position de solidarisation.

9. Dispositif d'occultation selon l'une quelconque des revendications 1 à 8, **caractérisé en ce que** chacune desdites toiles (21, 22) est montée sur un tube enrouleur distinct.

10. Dispositif d'occultation selon la revendication 9, **caractérisé en ce que** lesdits tubes enrouleurs peuvent prendre au moins deux positions :
- une première position dans laquelle lesdits tubes enrouleurs sont situés sensiblement sur un même axe ; et
- au moins une deuxième position dans laquelle les axes desdits tubes enrouleurs forment entre eux un angle non nul.

11. Dispositif d'occultation selon la revendication 10, **caractérisé en ce que** lesdits tubes enrouleurs sont montés dans une cassette pliable (1).

12. Dispositif d'occultation selon la revendication 11, **caractérisé en ce que** ladite cassette pliable (1) est formée de deux demi-cassettes (11, 12) articulées l'une par rapport à l'autre.

13. Dispositif d'occultation selon l'une quelconque des revendications 1 à 12, **caractérisé en ce qu'**il appartient au groupe comprenant:
- les cache-bagages ;
- les stores de compartimentage de coffre ;
- les stores d'occultation de pavillon ;
- les stores d'occultation de lunette arrière;
- les stores d'occultation de pare-brise;
- les stores de protection extérieure ou intérieure de pare-brise;
- les dispositifs coupe-vent.

14. Véhicule automobile **caractérisé en ce qu'**il comprend au moins un dispositif d'occultation selon l'une quelconque des revendications 1 à 13.
